# EUROPEAN PATENT SPECIFICATION

(11) **EP 3 006 956 B1**
(45) Date of publication and mention of the grant of the patent: **14.08.2019**
(21) Application number: 14804263.3
(22) Date of filing: 13.05.2014
(51) Int. Cl.: G01S 13/95, G01S 13/60, G01P 5/00, G01S 7/40, G01S 13/58

(54) **SURFACE TIDAL-CURRENT ESTIMATION DEVICE, RADAR DEVICE, SURFACE TIDAL-CURRENT ESTIMATION METHOD AND SURFACE TIDAL-CURRENT ESTIMATION PROGRAM**
VORRICHTUNG FÜR OBERFLÄCHENGEZEITENSTROMSCHÄTZUNG, RADARVORRICHTUNG, VERFAHREN FÜR OBERFLÄCHENGEZEITENSTROMSCHÄTZUNG UND PROGRAMM FÜR OBERFLÄCHENGEZEITENSTROMSCHÄTZUNG
DISPOSITIF, PROCÉDÉ ET PROGRAMME D'ESTIMATION DE COURANT DE MARÉE DE SURFACE ET DISPOSITIF RADAR

(30) Priority: 31.05.2013 JP 2013115444
(43) Date of publication of application: 13.04.2016
(73) Proprietor: Furuno Electric Co., Ltd., Nishinomiya-City, Hyogo 662-8580 (JP)
(72) Inventor: NAKAGAWA, Kazuya, Nishinomiya-City, Hyogo 662-8580 (JP); MORIGAKI, Ryosuke, Nishinomiya-City, Hyogo 662-8580 (JP); MAENO, Hitoshi, Nishinomiya-City, Hyogo 662-8580 (JP)
(74) Representative: Müller Hoffmann & Partner
(86) International application number: PCT/JP2014/062656
(87) International publication number: WO 2014/192528

(56) References cited:
- JP-A- H1 183 992
- JP-A- H03 262 990
- JP-A- H11 237 477
- JP-A- 2009 300 207
- K-W GURGEL ET AL: "On the performance of a shipborne current mapping HF radar", IEEE JOURNAL OF OCEANIC ENGINEERING, IEEE SERVICE CENTER, PISCATAWAY, NJ, US, vol. 25, no. 1, 1 January 2000 (2000-01-01), pages 183-191, XP011449905, ISSN: 0364-9059, DOI: 10.1109/48.820749
- FRANCESCO SERAFINO ET AL: "A Novel Strategy for the Surface Current Determination From Marine X-Band Radar Data", IEEE GEOSCIENCE AND REMOTE SENSING LETTERS, IEEE SERVICE CENTER, NEW YORK, NY, US, vol. 7, no. 2, 1 April 2010 (2010-04-01), pages 231-235, XP011332621, ISSN: 1545-598X, DOI: 10.1109/LGRS.2009.2031878

## Description

### TECHNICAL FIELD

This disclosure relates to a surface tidal current estimator configured to estimate a surface tidal current, a radar apparatus including the surface tidal current estimator, and a method and program for estimating a surface tidal current, the surface tidal current being a tidal current in a surface zone of ocean.

### BACKGROUND ART

Conventionally, as a method of estimating a surface tidal current that is a tidal current in a surface zone of ocean, a method disclosed in Patent Document 1 is known, for example. Specifically, in Patent Document 1, a surface current speed is obtained by applying Fourier transform on reception signals obtained by an ocean radar.

Further, as another method of estimating the surface tidal current, it is generally known to use instruments, such as an ultrasonic current meter.
"On the performance of a shipborne current mapping HF radar" by K-W Gurgel and H-H Essen (IEEE JOURNAL OF OCEANIC ENGINEERING, 20000101 IEEE SERVICE CENTER, PISCATAWAY, NJ, US - ISSN 0364-9059, Vol:25, Nr:1, Page(s):183 - 191) reports on shipborne radars and discusses problems which arise for the azimuthal resolution on a metal ship, the correction for the ship's speed, and limitations due to pitch-and-roll motions.

### REFERENCE DOCUMENT(S) OF CONVENTIONAL ART

### Patent Document

Patent Document 1: JP1999-237477A

### DISCLOSURE OF THE INVENTION

### [Problems to be Solved by the Invention]

Meanwhile, with the method disclosed in Patent Document 1, a calculation load for obtaining a spatial distribution of a tidal current is comparatively high and the calculation of the surface tidal current requires comparatively long time. Whereas, the ultrasonic current meter can only obtain a tidal current near a measurement position.

This disclosure is made in view of the above situations and aims to estimate a distribution of surface tidal current velocity vectors in short time.

### [Summary of the Invention]

The above issue is solved by the subject-matter of the independent claims.

### Effect(s) of the Invention

According to this disclosure, a distribution of surface tidal current velocity vectors can be estimated within short time.

### BRIEF DESCRIPTION OF DRAWING(S)

Fig. 1 is a block diagram illustrating configurations of a surface tidal current estimator and a radar apparatus including the surface tidal current estimator, according to one embodiment of this disclosure.
Fig. 2 is a view illustrating a display example when a distribution status of wave-crest velocity vectors calculated by the surface tidal current estimator in Fig. 1 is displayed on a second display unit.
Fig. 3 is a block diagram illustrating a configuration of a relative tidal current distribution estimating module of the surface tidal current estimator in Fig. 1.
Fig. 4 is a view illustrating respective areas set by the relative tidal current distribution estimating module of the surface tidal current estimator in Fig. 1.
Fig. 5 shows vectorial views illustrating respective velocity vectors forming each wave-crest velocity vector, in which Part (A) is a wave-crest velocity vector at a certain position inside an analyzing area, Part (B) is a wave-crest velocity vector of a first-ship vicinity area, and Part (C) is a vector indicating a result of subtracting the wave-crest velocity vector in Part (B) from the wave-crest velocity vector in Part (A).
Fig. 6 is a view illustrating one example of echo images of wave crests inside a calculation target area.
Fig. 7 is a block diagram illustrating a configuration of an absolute tidal current distribution estimating module of the surface tidal current estimator in Fig. 1.
Fig. 8 is a flowchart illustrating a flow of calculating a relative tidal current velocity vector distribution.
Fig. 9 is a flowchart illustrating a flow of calculating an absolute tidal current velocity vector distribution.
Fig. 10 is a block diagram illustrating configurations of a surface tidal current estimator and a radar apparatus including the surface tidal current estimator, according to a modification.
Fig. 11 is a block diagram illustrating a configuration of an absolute tidal current distribution estimating module of a surface tidal current estimator, according to another modification.
Fig. 12 is a block diagram illustrating configurations of a surface tidal current estimator and a radar apparatus including the surface tidal current estimator, according to another modification.

### MODE(S) FOR CARRYING OUT THE INVENTION

Hereinafter, a surface tidal current estimator 10 and a radar apparatus 1 including the surface tidal current estimator 10, according to one embodiment of this disclosure, is described with reference to the drawings. The radar apparatus 1 according to the embodiment of this disclosure is equipped, for example, in a ship (first ship) and used to detect a target object on the sea (e.g., another ship). Further, the radar apparatus according to this embodiment is configured to be capable of obtaining information regarding a tidal current in a surface zone of ocean (surface tidal current). The surface tidal current estimator 10 is equipped in a ship (particularly a large-size ship) that navigates on the sea and, for example, is used to finely adjust a course of the first ship to ride a current of the surface tidal current, so as to save fuel.

### [Overall Configuration]

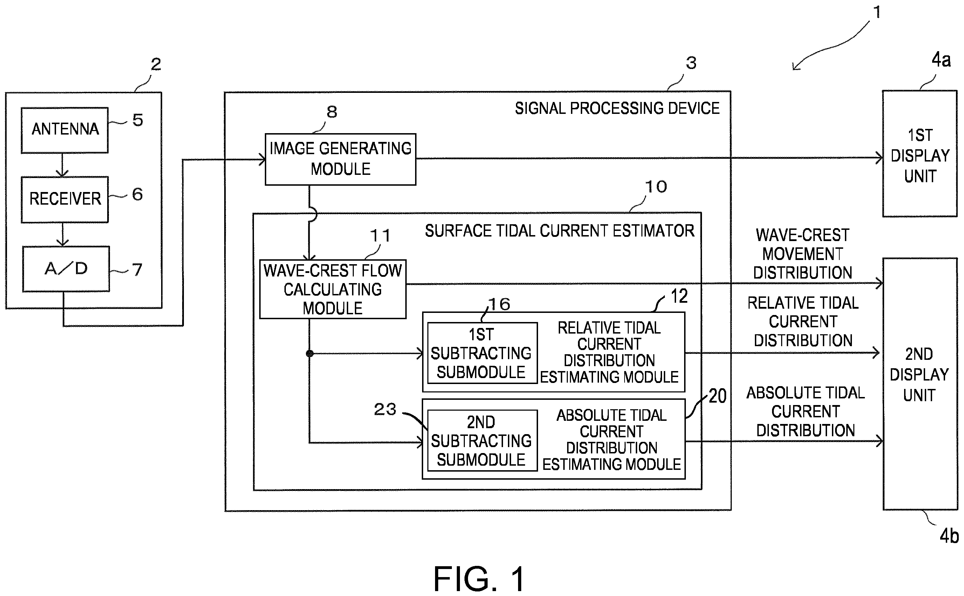

Fig. 1 is a block diagram illustrating the radar apparatus 1 according to the embodiment of this disclosure. As illustrated in Fig. 1, the radar apparatus 1 includes an antenna unit 2, a signal processing device 3, a first display unit 4a, and a second display unit 4b (display unit).

The antenna unit 2 includes an antenna 5, a receiver 6, and an A/D converter 7.

The antenna 5 is a radar antenna capable of transmitting (discharging) a pulse-shaped radio wave having a strong directivity. Further, the antenna 5 is configured to receive an echo signal (reflection wave) from the target object. Specifically, the antenna 5 is configured to receive an echo signal for identifying the target object. The radar apparatus 1 measures a period of time from the transmission of the pulse-shaped radio wave until the reception of the echo signal. Thus, the radar apparatus 1 can detect a distance r to the target object. A direction in which the first ship and the target object oppose to each other is defined as the distance direction.

The antenna 5 is configured to be capable of rotating over 360° in a horizontal plane, and rotates about a vertical axis. The antenna 5 is configured to repeat the transmission and reception of the pulse-shaped radio waves while changing the transmitting direction of the radio wave (while changing a rotational angle of the antenna 5). With the above configuration, the radar apparatus 1 can detect the target object in a plane around the first ship over 360°.

The receiver 6 detects the echo signal received by the antenna 5 and amplifies it. The echo signal is, among signals received by the antenna 5, a reflection wave from one of the target object and a wave crest, caused by the transmission signal from the antenna 5. The receiver 6 outputs the amplified echo signal to the A/D converter 7. The A/D converter 7 samples the echo signal in analog format and converts it into digital data (echo data) comprised of a plurality of bits. Here, the value of the echo data includes a value of data for identifying an intensity (signal level) of the echo signal received by the antenna 5. The A/D converter 7 outputs the echo data to an image generating module 8 of the signal processing device 3.

The signal processing device 3 includes the image generating module 8 and the surface tidal current estimator 10.

The image generating module 8 generates image data by using data having comparatively high signal level (e.g., the other ship), based on the echo data from the A/D converter 7. In this embodiment, the image generating module 8 generates PPI (Plan Position Indicator) image data. The image data generated by the image generating module 8 is outputted to the first display unit 4a. Thus, a user can grasp a position of the other ship based on a position of the first ship.

Further, the image generating module 8 generates the image data by using the reflection wave on a sea surface, based on the echo data from the A/D converter 7. The image generating module 8 generates the image data at a plurality of timings. The image data generated in this manner is outputted to the surface tidal current estimator 10.

The surface tidal current estimator 10 is configured to estimate a distribution of wave-crest velocity vectors, a distribution of absolute surface tidal current velocity vectors, and a distribution of relative surface tidal current velocity vectors, based on the image data generated by using the reflection wave on the sea surface. The configuration of the surface tidal current estimator 10 is described later in detail.

Note that, the absolute surface tidal current means a tidal current in a surface zone of ocean (e.g., a zone from a surface to a water depth of a few meters to about a few tens of meters), and is discriminated from an ocean current of which flow is substantially constant regardless of time. The surface tidal current is mainly caused by wind waves (waves caused by wind blowing at a position concerned) and swell (waves propagated due to wind in a different marine area). Further, the relative surface tidal current means a surface tidal current in a certain area obtained with respect to a surface tidal current at a predetermined position (e.g., the position of the first ship) outside the certain area. Note that, in this specification, the absolute surface tidal current may simply be referred to as the absolute tidal current. Moreover, the relative surface tidal current may simply be referred to as the relative tidal current.

The first display unit 4a displays an image signal generated by the image generating module 8 (the image signal generated due to the other ship, etc.). Further, the second display unit 4b displays the distribution of the wave-crest velocity vectors, the distribution of the absolute tidal current velocity vectors, and the distribution of the relative tidal current velocity vectors which are calculated by the surface tidal current estimator 10. For example, the second display unit 4b is configured to display one of the distribution of the wave-crest velocity vectors, the distribution of the absolute tidal current velocity vectors, and the distribution of the relative tidal current velocity vectors by switching a mode of a switch (not illustrated).

### [Configuration of Surface Tidal current Estimator]

As illustrated in Fig. 1, the surface tidal current estimator 10 includes a wave-crest flow calculating module 11 (deriving module), a relative tidal current distribution estimating module 12, and an absolute tidal current distributing module 20. The surface tidal current estimator 10 is configured using hardware comprised of a CPU, a RAM and a ROM (not illustrated). Moreover, the surface tidal current estimator 10 is configured using software comprised of a surface tidal current estimating program stored in the ROM.

The surface tidal current estimating program is a program configured to cause the surface tidal current estimator 10 to implement a method of estimating the surface tidal current of one embodiment of this disclosure. The program can be installed externally. The program to be installed is distributed stored in a memory medium, for example. The hardware and software are configured to operate in cooperation with each other. Thus, the surface tidal current estimator 10 can function as the wave-crest flow calculating module 11, the relative tidal current distribution estimating module 12, and the absolute tidal current distribution estimating module 20.

The wave-crest flow calculating module 11 is configured to calculate the velocity vector of a wave crest on the sea surface within a predetermined range of a predetermined distance centering on the first ship (hereinafter, referred to as the calculation target area A). Specifically, the wave-crest flow calculating module 11 calculates an optical flow of the wave crest by using the images generated by the image generating module 8 at the plurality of timings. The optical flow means an apparent distribution of velocity vectors of a moving object (in this embodiment, wave crest) in the images. Examples of the method of calculating the optical flow of the wave crest include the correlation method and the gradient method. Since these methods are known, the specific description thereof is omitted.

Each of the wave crest velocity vectors calculated at a plurality of positions inside the calculation target area A by the wave-crest flow calculating module 11 is outputted to the second display unit 4b, the relative tidal current distribution estimating module 12, and the absolute tidal current distribution estimating module 20.

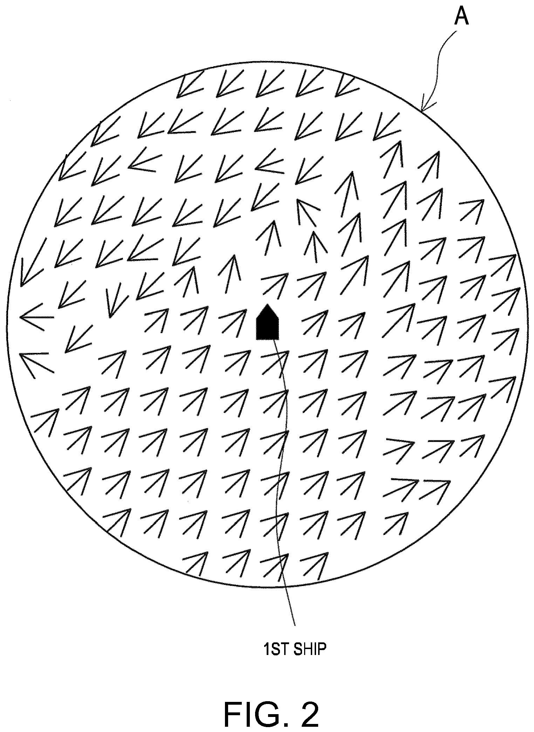

Fig. 2 is a view illustrating one example of the wave-crest velocity vectors at the respective positions inside the calculation target area A, displayed on the second display unit 4b. In the example of Fig. 2, the magnitude of the wave-crest velocity vector at each position is indicated by the size of the arrow displayed at the corresponding position, and the direction of the wave-crest velocity vector at each position is indicated by the direction of the arrow displayed at the corresponding position.

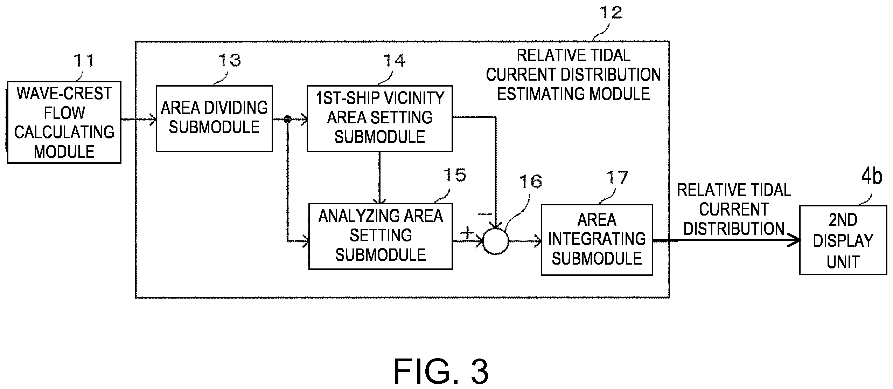

Fig. 3 is a block diagram illustrating a configuration of the relative tidal current distribution estimating module 12. The relative tidal current distribution estimating module 12 is configured to estimate the distribution of the relative tidal current velocity vectors inside the calculation target area A, based on the wave-crest velocity vector distribution inside the calculation target area A calculated by the wave-crest flow calculating module 11.

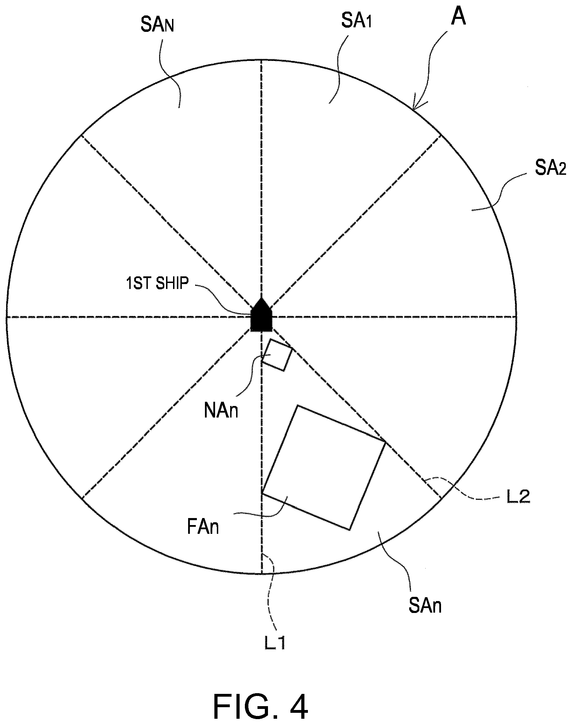

As illustrated in Fig. 4, the relative tidal current distribution estimating module 12 includes an area dividing submodule 13, a first-ship vicinity area setting submodule 14 (first area setting module), an analyzing area setting submodule 15 (second area setting module), a first subtracting submodule 16 (correcting module), and an area integrating submodule 17.

Fig. 4 is a view illustrating respective areas set by the relative tidal current distribution estimating module 12. As illustrated in Fig. 4, the area dividing submodule 13 divides the calculation target area A by an angular range into a plurality of subareas SAₙ (n= 1, 2, ..., N) in a horizontal direction centering on the first ship. As one example, the area dividing submodule 13 divides the calculation target area A by a predetermined angular range to form a plurality of subareas SAₙ, each having a fan shape with the same central angle.

The first-ship vicinity area setting submodule 14 sets a first-ship vicinity area NAₙ (first area) in the vicinity of the first ship in an arbitrary azimuth direction. In this embodiment, as illustrated in Fig. 4, the first-ship vicinity area setting submodule 14 sets a predetermined area in the vicinity of the first ship inside each subarea SAₙ, as the first-ship vicinity area NAₙ.

As illustrated in Fig. 4, the analyzing area setting submodule 15 sets an analyzing area FAₙ (second area) in the azimuth direction corresponding to that of the first-ship vicinity area NAₙ set by the first-ship vicinity area setting submodule 14. The analyzing area FAₙ is set farther than the first-ship vicinity area NAₙ, centering on the first ship. Further in this embodiment, as illustrated in Fig. 4, the first-ship vicinity area NAₙ is set within a range between an azimuth line L1 and an azimuth line L2, and therefore, the analyzing area FAₙ is also set within the range between the azimuth lines L1 and L2. The analyzing area setting submodule 15 sets one or more of the analyzing areas FAₙ for each subarea SAₙ so as to cover the entire area of the subarea SAₙ.

The first subtracting submodule 16 corrects the wave-crest velocity vector at each position inside each analyzing area FAₙ by subtracting therefrom the wave-crest velocity vector of the first-ship vicinity area NAₙ corresponding to the analyzing area FAₙ. Thus, the first subtracting submodule 16 calculates the relative tidal current velocity vector at each position inside each analyzing area FAₙ. As a result, the first subtracting submodule 16 calculates the relative tidal current velocity vector at each position inside each subarea SAₙ.

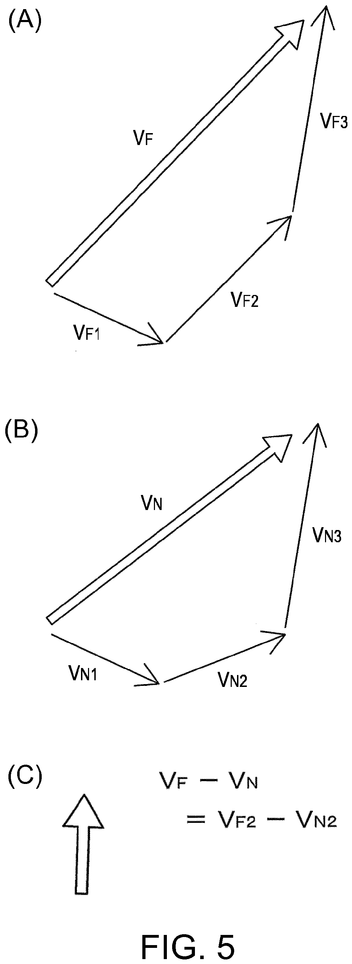

Fig. 5 shows vectorial views illustrating the respective velocity vectors forming each wave-crest velocity vector, in which Part (A) is a wave-crest velocity vector V_{F} at a certain position inside the analyzing area FAₙ, Part (B) is a wave-crest velocity vector V_{N} inside the first-ship vicinity area NAₙ, and Part (C) is a vector (V_{F}-V_{N}) indicating a result of subtracting the wave-crest velocity vector V_{N} from the wave-crest velocity vector V_{F}. As illustrated in Fig. 5, the wave-crest velocity vectors V_{F} and V_{N} can be expressed as velocity vectors formed by synthesizing main elements: ocean-wave velocity vectors V_{F1} and V_{N1}; absolute tidal current velocity vectors V_{F2} and V_{N2}; and observation error vectors V_{F3} and V_{N3}, respectively. The ocean-wave velocity vectors V_{F1} and V_{N1} are velocity vectors of ocean waves corresponding to a motion of the sea surface in height directions. Moreover, the observation error vectors V_{F3} and V_{N3} are vectors of observation errors dependent on the azimuth of the antenna 5.

When the wave-crest velocity vector V_{F} at a certain position (a certain position inside the analyzing area FAₙ) is subtracted by the wave-crest velocity vector V_{N} near the position of the first ship (first-ship vicinity area NAₙ), the relative tidal current velocity vector is calculated for the following reasons.

The ocean-wave velocity vectors V_{F1} and V_{N1} included in both of the wave-crest velocity vectors V_{F} and V_{N} are velocity vectors mainly caused by wind, and are considered constant in magnitude and direction within a marine area of a certain size. Thus, in the subtraction result, the ocean-wave velocity vectors V_{F1} and V_{N1} in the wave-crest velocity vectors V_{F} and V_{N}, respectively, compensate each other.

Further, the observation error vectors V_{F3} and V_{N3} in both of the wave-crest velocity vectors are error vectors dependent on the azimuth direction of the antenna. Here, the observation error vector is described as follows.

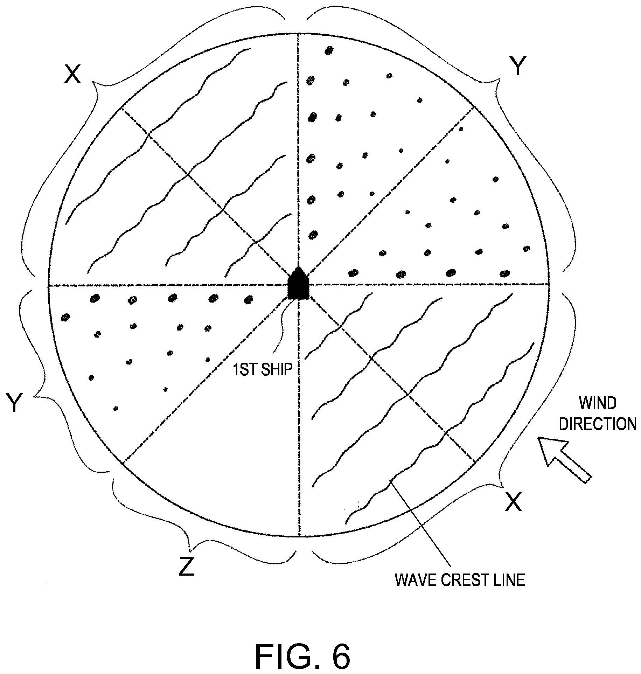

Fig. 6 is a view illustrating one example of echo images of wave crests inside the calculation target area A, in other words, one example of the image data generated by the image generating module 8 based on the reflection waves on the sea surface at certain timings. Fig. 6 indicates a state where wind blows in the white arrow direction and the wave crests move in the arrow direction.

Although actual wave crest lines inside the calculation target area A are formed over the entire calculation target area A, in the echo images in Fig. 6, the echoes are presented differently in every azimuth range.

Specifically, inside the echo image within areas X, echoes having a shape similar to the actual wave crest lines are observed. This is because each transmission wave from the antenna 5 of the radar apparatus 1 according to this embodiment, which is equipped in the first ship, enters the wave crest line substantially perpendicularly, and thus, the actual shape of the wave crest lines can be reflected in the image.

Whereas inside the echo image within areas Y, dot-shaped echoes different from the actual wave crest lines are observed. This is because each transmission wave from the antenna 5 enters the wave crest line from one side of the wave crest line in its extending direction, and thus, the wave crest lines are not illustrated in lineal shape, but are illustrated in dot shape.

Further, inside the echo image within an area Z, the echo image is not observed. This is because an obstacle exists near the first ship and the transmission waves from the antenna 5 are blocked by the obstacle.

As described above, the wave crest lines occurring over the entire calculation target area A are displayed as the different echo images depending on the azimuth. In this specification, such a vector that is presented differently depending on the azimuth orientation of the antenna 5 is referred to as the observation error vector. Note that, the observation error vector may be caused by swell, etc.

In this embodiment, since the first-ship vicinity area NAₙ and the analyzing area FAₙ are set within the same angle range as illustrated in Fig. 4, in the subtraction result, the observation error vectors V_{F3} and V_{N3} compensate each other.

Thereby, as the vector component obtained in the subtraction result, mainly the vector obtained by subtracting the absolute tidal current velocity vector V_{N2} of the first-ship vicinity area NAₙ from the absolute tidal current velocity vector V_{F2} of the analyzing area FAₙ (relative tidal current velocity vector) is calculated.

The area integrating submodule 17 integrates the subareas SAₙ where the relative tidal current velocity vector is calculated at each position. Thus, the relative tidal current velocity vectors over the entire calculation target area A are calculated. In other words, the distribution status of the relative tidal current velocity vectors inside the calculation target area A can be known.

Similar to the case of the wave-crest velocity vector, the distribution of the relative tidal current velocity vectors calculated inside the calculation target area A by the area integrating submodule 17 is displayed on the second display unit 4b (see Fig. 3). Specifically, the magnitude of the relative tidal current velocity vector at each position is indicated by the size of the arrow displayed at the corresponding position, and the direction of the relative tidal current velocity vector at each position is indicated by the direction of the arrow displayed at the corresponding position.

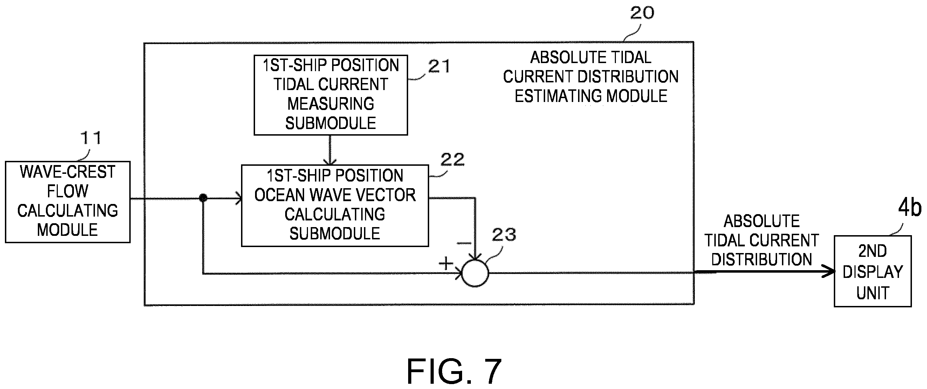

Fig. 7 is a block diagram illustrating a configuration of the absolute tidal current distribution estimating module 20. The absolute tidal current distribution estimating module 20 is configured to estimate a distribution of the absolute tidal current velocity vectors inside the calculation target area A based on the wave-crest velocity vector distribution calculated inside the calculation target area A by the wave-crest flow calculating module 11.

As illustrated in Fig. 7, the absolute tidal current distribution estimating module 20 includes a first-ship position tidal current measuring submodule 21, a first-ship position ocean wave vector calculating submodule 22, and a second subtracting submodule 23 (correcting module).

The first-ship position tidal current measuring submodule 21 is configured to measure the velocity vector of the tidal current (absolute tidal current) in the vicinity of the first ship. For example, the first-ship position tidal current measuring submodule 21 is configured by an ultrasonic current meter configured to measure a flow speed of the tidal current in the vicinity of the first ship by using ultrasonic waves.

The first-ship position ocean wave vector calculating submodule 22 corrects the wave-crest velocity vector in the vicinity of the first ship among the wave-crest velocity vectors calculated by the wave-crest flow calculating module 11, by subtracting therefrom the absolute tidal current velocity vector measured by the first-ship position tidal current measuring submodule 21. Thus, the velocity vector of the ocean waves in the vicinity of the first ship is calculated.

The second subtracting submodule 23 corrects the wave-crest velocity vector calculated at each position by the wave-crest flow calculating module 11, by subtracting therefrom the velocity vector of the ocean waves calculated in the vicinity of the first ship by the first-ship position ocean wave vector calculating submodule 22. Generally, since the velocity vector of the ocean waves corresponding to a motion of the sea surface in the height directions is mainly caused by power of wind, it is substantially constant in magnitude and direction within a range of a certain size. Therefore, the calculation result of the second subtracting submodule 23 can be estimated to be the absolute tidal current velocity vector at each position inside the calculation target area A. Thus, the distribution status of the absolute tidal current velocity vectors inside the calculation target area A can be known.

Similar to the cases of the wave-crest velocity vector and the relative tidal current velocity vector, the distribution of the absolution tidal current velocity vectors calculated inside the calculation target area A by the second subtracting submodule 23 is displayed on the second display unit 4b (see Fig. 3). Specifically, the magnitude of the absolute tidal current velocity vector at each position is indicated by the size of the arrow displayed at the corresponding position, and the direction of the absolute tidal current velocity vector at each position is indicated by the direction of the arrow displayed at the corresponding position.

### [Operation of Surface Tidal current Estimator]

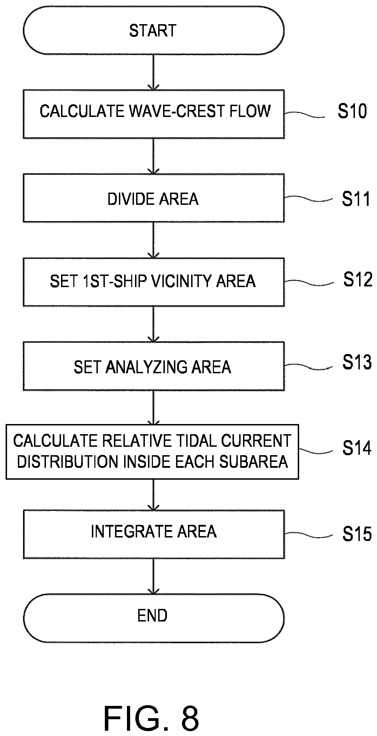

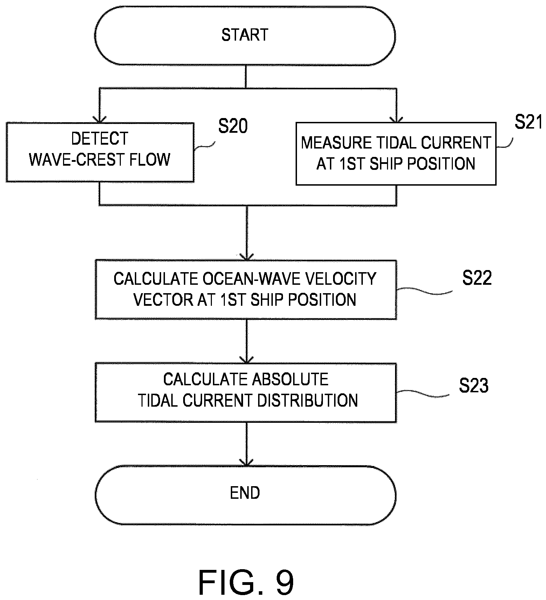

Figs. 8 and 9 are flowcharts illustrating the operation of the surface tidal current estimator 10, in which Fig. 8 is a flowchart illustrating a flow of calculating the relative tidal current distribution, and Fig. 9 is a flowchart illustrating a flow of calculating the absolute tidal current distribution.

First, the flow of calculating the relative tidal current distribution is described with reference to Fig. 8.

First at S10, the wave-crest flow calculating module 11 calculates the velocity vector of the wave crest on the sea surface at each position inside the calculation target area A of the predetermined distance centering on the first ship.

Next at S11, the area dividing submodule 13 divides the calculation target area A by the predetermined angle into the plurality of subareas SAₙ.

Then, at S12, the first-ship vicinity area setting submodule 14 sets the predetermined area in the vicinity of the first ship inside each subarea SAₙ, to be the first-ship vicinity area NAₙ.

Next at S13, inside each subarea SAₙ, the analyzing area setting submodule 15 sets the analyzing area FAₙ farther than the first-ship vicinity area NAₙ set inside the corresponding subarea SAₙ. At S13, the analyzing area setting submodule 15 sets one or more of the analyzing areas FAₙ for each subarea SAₙ so that the entire area of the subarea SAₙ is covered by the analyzing area FAₙ.

Then, at S14, the first subtracting submodule 16 subtracts the wave-crest velocity vector of the first-ship vicinity area NAₙ corresponding to each analyzing area FAₙ, from the wave-crest velocity vector at each position inside the analyzing area FAₙ. Thus, at S14, the relative tidal current distribution inside each subarea SAₙ is calculated.

Finally at S15, the area integrating submodule 17 integrates the subareas SAₙ where the relative tidal current velocity vector is calculated at each position. Thus, the relative tidal current velocity vectors over the entire calculation target area A are calculated.

Next, the flow of calculating the absolute tidal current distribution is described with reference to Fig. 9.

First at S20, the wave-crest flow calculating module 11 calculates the velocity vector of the wave crest on the sea surface at each position inside the calculation target area A of the predetermined distance centering on the first ship.

Meanwhile, at S21, the first-ship position tidal current measuring submodule 21 measures the velocity vector of the tidal current in the vicinity of the first ship (absolute tidal current).

Next at S22, the first-ship position ocean wave vector calculating submodule 22 calculates the ocean-wave velocity vector at the first ship position. Specifically, the first-ship position ocean wave vector calculating submodule 22 subtracts the absolute tidal current velocity vector at the first ship position measured at S21, from the wave-crest velocity vector in the vicinity of the first ship among the wave-crest velocity vectors calculated at S20.

Then, at S23, the absolute tidal current distribution over the entire calculation target area A is calculated. Specifically, at S23, the second subtracting submodule 23 subtracts the ocean-wave velocity vector at the first ship position calculated at S22, from the wave-crest velocity vector at each position inside the calculation target area A calculated at S20.

### [Effects]

As described above, the surface tidal current estimator 10 according to this embodiment corrects each of the wave-crest velocity vectors at the plurality of positions inside the calculation target area A (the plurality of positions inside the analyzing area FAₙ) based on the wave-crest velocity vector at a certain position (first-ship vicinity area NAₙ) inside the calculation target area A. In this manner, the tidal current velocity vector at each position inside the analyzing area FAₙ with respect to the tidal current velocity vector of the first-ship vicinity area NAₙ, in other words, the relative tidal current velocity vector inside the analyzing area FAₙ with respect to the first-ship vicinity area NAₙ, can be estimated. By obtaining the relative tidal current velocity vector as above, the tidal current velocity is not required to be obtained by applying the Fourier transform on the reception signals obtained by the ocean radar as the conventional case, and the relative tidal current velocity vector distribution can be estimated in short time.

Further, the surface tidal current estimator 10 corrects the wave-crest velocity vector at each position inside the calculation target area A, based on the velocity vector of the ocean waves calculated in the vicinity of the first ship by the first-ship position ocean wave vector calculating submodule 22. In this manner, the absolute tidal current velocity vector at each position inside the calculation target area A can be estimated. By obtaining the absolute tidal current velocity vector as above, the tidal current velocity is not required to be obtained by applying the Fourier transform on the reception signals obtained by the ocean radar as the conventional case, and the absolute tidal current velocity vector distribution can be estimated in short time.

Therefore, the surface tidal current estimator 10 can estimate the surface tidal current velocity vector distribution in short time.

Moreover, the surface tidal current estimator 10 corrects the wave-crest velocity vector at each position inside the analyzing area FAₙ by subtracting therefrom the wave-crest velocity vector of the first-ship vicinity area NAₙ. Thus, the relative tidal current velocity vector can suitably be obtained.

Moreover, the surface tidal current estimator 10 corrects the wave-crest velocity vector at each position inside the calculation target area A by subtracting therefrom the ocean-wave velocity vector in the vicinity of the first ship. Thus, the absolute tidal current velocity vector can suitably be obtained.

Moreover, the surface tidal current estimator 10 calculates the ocean-wave velocity vector at one of the plurality of positions by subtracting the tidal current velocity vector at the one of the plurality of positions from the wave-crest velocity vector at the one of the plurality of positions. Thus, the ocean-wave velocity vector used for estimating the absolute tidal current velocity vector distribution can suitably be obtained.

Moreover, the surface tidal current estimator 10 sets the first-ship vicinity area NAₙ and the analyzing area FAₙ in the corresponding azimuth direction, specifically, substantially the same azimuth direction, and corrects the wave-crest velocity vector at each position inside the analyzing area FAₙ by subtracting therefrom the wave-crest velocity vector of the first-ship vicinity area NAₙ. Thus, the observation error vector V_{F3} dependent on the azimuth direction of the antenna 5 can be removed from the subtraction result, and therefore, a more accurate relative tidal current velocity vector can be calculated.

Moreover, the surface tidal current estimator 10 divides the calculation target area A by the predetermined angle into the plurality of subareas SAₙ, and sets the first-ship vicinity area NAₙ and the analyzing area FAₙ inside each subarea SAₙ. Thus, the first-ship vicinity area NAₙ and the analyzing area FAₙ can suitably be set to be in substantially the same azimuth direction. Furthermore, the surface tidal current estimator 10 can estimate the relative tidal current velocity vector with the observation error vector V_{F3} removed over the entire range of the calculation target area A by integrating the respective analyzing areas FAₙ where the relative tidal current velocity vector is estimated at each position therein. Therefore, more accurate relative tidal current velocity vectors can be calculated over the entire range of the calculation target area A.

Moreover, the radar apparatus 1 according to this embodiment, the tidal current velocity vector distribution which is estimated by the surface tidal current estimator 10 provided to the radar apparatus 1 is displayed on the second display unit 4b. Thus, the user can visually suitably confirm the tidal current velocity vector distribution.

Although the embodiment of this disclosure is described above, this disclosure is not limited to the embodiment described above, and may be variously modified without deviating from the scope of this disclosure.

### [Modifications]

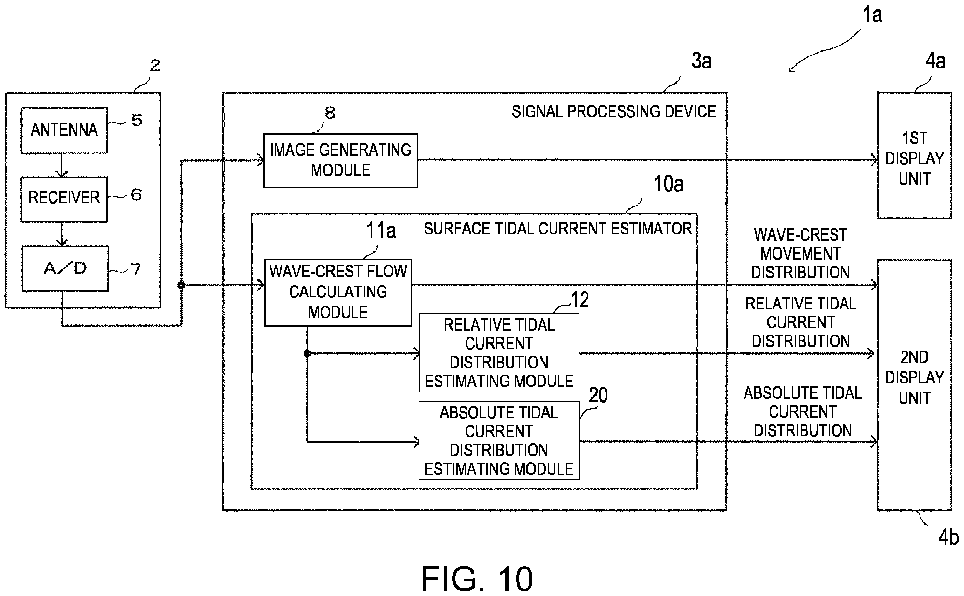

(1) Fig. 10 is a block diagram illustrating configurations of a surface tidal current estimator 10a and a radar apparatus 1a including the surface tidal current estimator 10a, according to a modification. In the above embodiment, the wave-crest flow calculating module 11 is calculated based on the optical flow; however, without limiting to this, the calculation may be performed based on Doppler measurement. For example, a wave-crest flow calculating module 11a according to this modification is configured to calculate the wave-crest velocity vector at each position inside the calculation target area A based on a frequency difference between a reflection wave of a pulse wave transmitted by the antenna 5 at a first timing and a reflection wave of a pulse wave transmitted by the antenna 5 at a second timing.

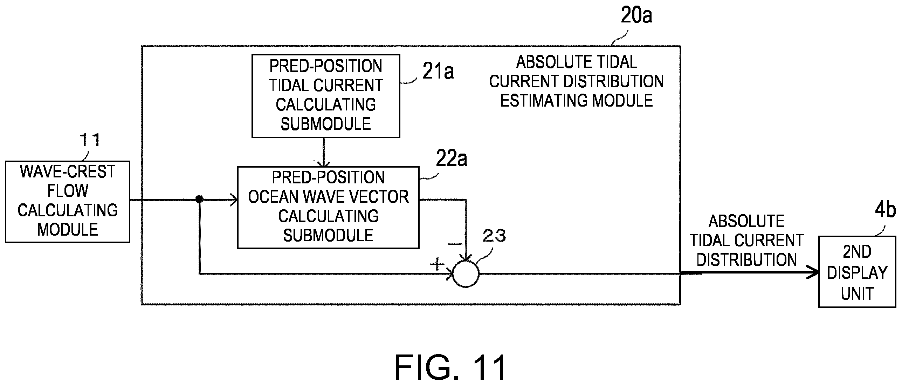

(2) Fig. 11 is a block diagram illustrating a configuration of an absolute tidal current distribution estimating module 20a of a surface tidal current estimator according to another modification. The absolute tidal current distribution estimating module 20a of this modification includes a predetermined-position tidal current calculating submodule 21a, a predetermined-position ocean wave vector calculating module 22a, and the second subtracting submodule 23.
   The predetermined-position tidal current calculating submodule 21a is configured to calculate a tidal current at a predetermined position inside the calculation target area A (absolute tidal current). Specifically, as one example, the predetermined-position tidal current calculating submodule 21a calculates a velocity vector of a tidal current at the predetermined position by a 3-dimentional Fourier analysis method using echo images of wave crests at a plurality of timings. Since this method is known, the description thereof is omitted.
   The predetermined-position ocean wave vector calculating submodule 22a corrects the wave-crest velocity vector at the predetermined position among the wave-crest velocity vectors calculated by the wave-crest flow calculating module 11, by subtracting therefrom the absolute tidal current velocity vector calculated by the predetermined-position tidal current calculating submodule 21a. Thus, an ocean-wave velocity vector at the predetermined position is calculated.
   The second subtracting submodule 23 corrects the wave-crest velocity vector at each position calculated by the wave-crest flow calculating module 11, by subtracting therefrom the ocean-wave velocity vector calculated at the predetermined position by the predetermined-position ocean wave vector calculating submodule 22a. Thus, similar the above embodiment, a distribution status of the absolute tidal current velocity vectors inside the calculation target area A can be known.
(3) In the above embodiment, the second display unit 4b configured to display the tidal current velocity vectors is provided as a separate display unit from the first display unit 4a configured to display the echo images of the other ship, etc.; however, without limiting to this, the tidal current velocity vectors and the echo images may be displayed superimposed with each other on the same display unit. Further, in the above embodiment, the tidal current velocity vectors are displayed on the display unit of the radar apparatus 1; however, without limiting to this, for example, the tidal current velocity vector may be displayed on a display unit of a sonar device configured to detect a school of fish, etc. Thus, a movement of the school of fish can be predicted based on the velocity vector of the surface tidal current.

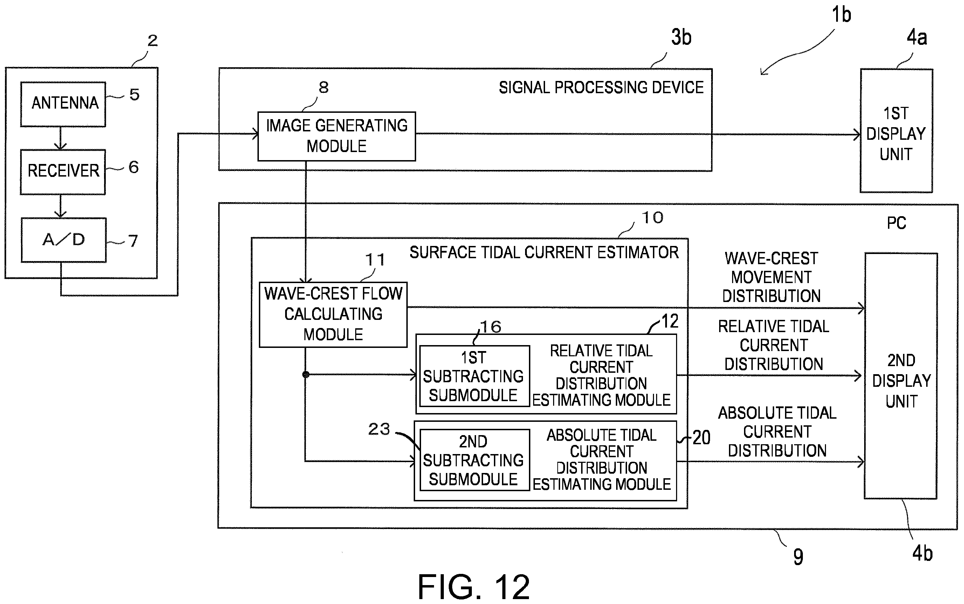

(4) Fig. 12 is a block diagram illustrating configurations of a radar apparatus 1b and a personal computer 9 including the surface tidal current estimator 10, according to another modification. As illustrated in Fig. 12, the surface tidal current estimator 10 may be provided to a personal computer 9 provided separately from the radar apparatus 1b. In this case, the tidal current velocity vector distribution that is the calculation result of the surface tidal current estimator 10 may be displayed on the second display unit 4b configured by a display unit of the personal computer 9.

### INDUSTRIAL APPLICABILITY

This disclosure is broadly applicable as a surface tidal current estimator configured to estimate a surface tidal current, a radar apparatus including the surface tidal current estimator, and method and program for estimating a surface tidal current, the surface tidal current being a tidal current in a surface zone of an ocean.

### DESCRIPTION OF REFERENCE NUMERAL(S)

- 1, 1a, 1b: Radar Apparatus
- 10, 10a: Surface Tidal current Estimator
- 11, 11a: Wave-crest Flow Calculating Module (Deriving Module)
- 16: First Subtracting Submodule (Correcting Module)
- 23: Second Subtracting Submodule (Correcting Module)

## Claims

1. A surface tidal current estimator (10), comprising:
a deriving module (11) configured to derive wave-crest velocity vectors at a plurality of positions within a predetermined range of a water surface, each of the wave-crest velocity vectors being a velocity vector of a wave crest on the water surface;
a correcting module (16) configured to correct each of the wave-crest velocity vectors derived at the plurality of positions by the deriving module (11), based on one of the wave-crest velocity vector derived inside a predetermined area within the predetermined range by the deriving module (11) and an ocean-wave velocity vector inside the predetermined area within the predetermined range, the ocean-wave velocity vector being a velocity vector of an ocean wave;
a first area setting module (14) configured to set a first area in an arbitrary azimuth direction, as the predetermined area; and
a second area setting module (15) configured to set a second area farther than the first area in an azimuth direction corresponding to that of the first area;
wherein the correcting module (16) corrects each of the wave-crest velocity vectors derived at the plurality of positions by the deriving module (11), by subtracting therefrom the wave-crest velocity vector derived inside the predetermined area within the predetermined range by the deriving module (11); and
wherein the correcting module (16) corrects the wave-crest velocity vectors at a plurality of positions inside the second area by subtracting the wave-crest velocity vector inside the first area from each of the wave-crest velocity vectors of the second area.

2. The surface tidal current estimator (10) of claim 1, further comprising an ocean-wave velocity vector calculating module configured to calculate an ocean-wave velocity vector at one of the plurality of positions by subtracting a tidal current velocity vector at the one of the plurality of positions from the wave-crest velocity vector derived at the one of the plurality of positions by the deriving module, the tidal current velocity vector being a velocity vector of a tidal current,
wherein the correcting module (16) corrects each of the wave-crest velocity vectors derived at the plurality of positions by the deriving module, by subtracting therefrom the ocean-wave velocity vector calculated by the ocean-wave velocity vector calculating module.

3. The surface tidal current estimator (10) of claim 1, further comprising an area dividing module (13) configured to divide the predetermined range by a predetermined azimuth range to form a plurality of subareas,
wherein the first area setting module (14) sets the first area for each of the plurality of subareas,
wherein the second area setting module (15) sets the second area for the subarea for which the corresponding first area is set, and
the surface tidal current estimator (10) further comprising an area integrating module (17) configured to integrate the plurality of subareas including the second area where the correction is performed by subtracting with the wave-crest velocity vector within the corresponding first area.

4. A radar apparatus (1), comprising:
an antenna (5) configured to transmit and receive radio waves;
the surface tidal current estimator (10) of any one of claims 1 to 3, wherein the deriving module (11) is configured to derive the wave-crest velocity vectors based on reception signals received by the antenna (5); and
a display unit (4a, 4b) configured to display a calculation result of the correcting module of the surface tidal current estimator (10) in a manner that a user is able to confirm.

5. A method of estimating a surface tidal current, comprising:
a step for deriving wave-crest velocity vectors at a plurality of positions within a predetermined range of a water surface, each of the wave-crest velocity vectors being a velocity vector of a wave crest on the water surface;
a step for correcting each of the wave-crest velocity vectors derived at the plurality of positions by the deriving module, based on one of the wave-crest velocity vector derived inside a predetermined area within the predetermined range by the deriving module and an ocean-wave velocity vector inside the predetermined area within the predetermined range, the ocean-wave velocity vector being a velocity vector of an ocean wave
a step for setting a first area in an arbitrary azimuth direction, as the predetermined area; and
a step for setting a second area farther than the first area in an azimuth direction corresponding to that of the first area;
wherein in the step for correcting each of the wave-crest velocity vectors derived at the plurality of positions is corrected by subtracting therefrom the wave-crest velocity vector derived inside the predetermined area within the predetermined range; and
wherein in the step of correcting the wave-crest velocity vectors is corrected at a plurality of positions inside the second area by subtracting the wave-crest velocity vector inside the first area from each of the wave-crest velocity vectors of the second area.

6. A surface tidal current estimating program that causes, when executed by a computer, the computer to carry out the method of claim 5.

## Patentansprüche

1. Schätzeinrichtung (10) für Oberflächengezeitenströme, umfassend:
ein Ableitungsmodul (11), das dafür konfiguriert ist, Wellenberg-Geschwindigkeitsvektoren bei einer Vielzahl von Positionen innerhalb eines vorbestimmten Bereichs einer Wasseroberfläche abzuleiten, wobei jeder der Wellenberg-Geschwindigkeitsvektoren ein Geschwindigkeitsvektor eines Wellenbergs auf der Wasseroberfläche ist;
ein Korrekturmodul (16), das dafür konfiguriert ist, jeden der Wellenberg-Geschwindigkeitsvektoren, die bei der Vielzahl von Positionen durch das Ableitungsmodul (11) abgeleitet wurden, basierend auf einem der Wellenberg-Geschwindigkeitsvektoren, der in einem vorbestimmten Gebiet innerhalb des vorbestimmten Bereichs durch das Ableitungsmodul (11) abgeleitet wurde, und einem Meereswellen-Geschwindigkeitsvektor in dem vorbestimmten Gebiet innerhalb des vorbestimmten Bereichs zu korrigieren, wobei der Meereswellen-Geschwindigkeitsvektor ein Geschwindigkeitsvektor einer Meereswelle ist;
ein ein erstes Gebiet festlegendes Modul (14), das dafür konfiguriert ist, ein erstes Gebiet in einer beliebigen Azimut-Richtung als das vorbestimmte Gebiet festzulegen; und
ein ein zweites Gebiet festlegendes Modul (15), das dafür konfiguriert ist, ein zweites Gebiet, das entfernter als das erste Gebiet ist, in einer Azimut-Richtung festzulegen, die derjenigen des ersten Gebiets entspricht;
wobei das Korrekturmodul (16) jeden der Wellenberg-Geschwindigkeitsvektoren, die bei der Vielzahl von Positionen durch das Ableitungsmodul (11) abgeleitet wurden, korrigiert, indem davon der Wellenberg-Geschwindigkeitsvektor subtrahiert wird, der in dem vorbestimmten Gebiet innerhalb des vorbestimmten Bereichs durch das Ableitungsmodul (11) abgeleitet wurde; und
wobei das Korrekturmodul (16) die Wellenberg-Geschwindigkeitsvektoren bei einer Vielzahl von Positionen in dem zweiten Gebiet korrigiert, indem der Wellenberg-Geschwindigkeitsvektor in dem ersten Gebiet von jedem der Wellenberg-Geschwindigkeitsvektoren des zweiten Gebiets subtrahiert wird.

2. Schätzeinrichtung (10) für Oberflächengezeitenströme nach Anspruch 1, ferner umfassend ein einen Meereswellen-Geschwindigkeitsvektor berechnendes Modul, das dafür konfiguriert ist, einen Meereswellen-Geschwindigkeitsvektor bei einer der Vielzahl von Positionen zu berechnen, indem ein Gezeitenstrom-Geschwindigkeitsvektor bei der einen der Vielzahl von Positionen von dem Wellenberg-Geschwindigkeitsvektor subtrahiert wird, der bei der einen der Vielzahl von Positionen durch das Ableitungsmodul abgeleitet wurde, wobei der Gezeitenstrom-Geschwindigkeitsvektor ein Geschwindigkeitsvektor eines Gezeitenstroms ist,
wobei das Korrekturmodul (16) jeden der Wellenberg-Geschwindigkeitsvektoren, die bei der Vielzahl von Positionen durch das Ableitungsmodul abgeleitet wurden, korrigiert, indem davon der Meereswellen-Geschwindigkeitsvektor subtrahiert wird, der durch das einen Meereswellen-Geschwindigkeitsvektor berechnende Modul berechnet wurde.

3. Schätzeinrichtung (10) für Oberflächengezeitenströme nach Anspruch 1, ferner umfassend ein ein Gebiet einteilendes Modul (13), das dafür konfiguriert ist, den vorbestimmten Bereich durch einen vorbestimmten Azimut-Bereich zu unterteilen, um eine Vielzahl von Teilgebieten zu bilden,
wobei das ein erstes Gebiet festlegende Modul (14) das erste Gebiet für jedes der Vielzahl von Teilgebieten festlegt,
wobei das ein zweites Gebiet festlegende Modul (15) das zweite Gebiet für das Teilgebiet festlegt, für das das entsprechende erste Gebiet festgelegt ist, und
die Schätzeinrichtung (10) für Oberflächengezeitenströme ferner ein Gebiete integrierendes Modul (17) umfasst, das dafür konfiguriert ist, die Vielzahl von Teilgebieten einschließlich des zweiten Gebiets zu integrieren, wo die Korrektur durchgeführt wird, indem mit dem Wellenberg-Geschwindigkeitsvektor innerhalb des entsprechenden ersten Gebiets subtrahiert wird.

4. Radarvorrichtung (1), umfassend:
eine Antenne (5), die dafür konfiguriert ist, Funkwellen zu senden und zu empfangen;
die Schätzeinrichtung (10) für Oberflächengezeitenströme nach einem der Ansprüche 1 bis 3, wobei das Ableitungsmodul (11) dafür konfiguriert ist, die Wellenberg-Geschwindigkeitsvektoren basierend auf von der Antenne (5) empfangenen Empfangssignalen abzuleiten; und
eine Anzeigeeinheit (4a, 4b), die dafür konfiguriert ist, ein Berechnungsergebnis des Korrekturmoduls der Schätzeinrichtung (10) für Oberflächengezeitenströme so anzuzeigen, dass ein Nutzer bestätigen kann.

5. Verfahren zum Schätzen eines Oberflächengezeitenstroms, umfassend:
einen Schritt, um Wellenberg-Geschwindigkeitsvektoren bei einer Vielzahl von Positionen innerhalb eines vorbestimmten Bereichs einer Wasseroberfläche abzuleiten, wobei jeder der Wellenberg-Geschwindigkeitsvektoren ein Geschwindigkeitsvektor eines Wellenbergs auf der Wasseroberfläche ist;
einen Schritt, um jeden der Wellenberg-Geschwindigkeitsvektoren, die bei der Vielzahl von Positionen durch das Ableitungsmodul abgeleitet wurden, basierend auf einem der Wellenberg-Geschwindigkeitsvektoren, der in einem vorbestimmten Gebiet innerhalb des vorbestimmten Bereichs durch das Ableitungsmodul abgeleitet wurde, und einem Meereswellen-Geschwindigkeitsvektor in dem vorbestimmten Gebiet innerhalb des vorbestimmten Bereichs zu korrigieren, wobei der Meereswellen-Geschwindigkeitsvektor ein Geschwindigkeitsvektor einer Meereswelle ist;
einen Schritt, um ein erstes Gebiet in einer beliebigen Azimut-Richtung als das vorbestimmte Gebiet festzulegen; und
einen Schritt, um ein zweites Gebiet, das entfernter als das erste Gebiet ist, in einer Azimut-Richtung festzulegen, die derjenigen des ersten Gebiets entspricht;
wobei in dem Schritt zum Korrigieren jeder der Wellenberg-Geschwindigkeitsvektoren, die bei der Vielzahl von Positionen abgeleitet wurden, korrigiert wird, indem davon der Wellenberg-Geschwindigkeitsvektor subtrahiert wird, der in dem vorbestimmten Gebiet innerhalb des vorbestimmten Bereichs abgeleitet wurde; und
wobei in dem Schritt zum Korrigieren die Wellenberg-Geschwindigkeitsvektoren bei einer Vielzahl von Positionen in dem zweiten Gebiet korrigiert werden, indem der Wellenberg-Geschwindigkeitsvektor in dem ersten Gebiet von jedem der Wellenberg-Geschwindigkeitsvektoren des zweiten Gebiets subtrahiert wird.

6. Programm zum Schätzen von Oberflächengezeitenströmen, das, wenn es von einem Computer ausgeführt wird, den Computer veranlasst, das Verfahren nach Anspruch 5 auszuführen.

## Revendications

1. Estimateur de courant de marée de surface (10) comprenant :
un module de calcul (11) configuré pour calculer des vecteurs de vitesse de crête de vague dans une pluralité de positions dans une plage prédéterminée d'une surface d'eau, chacun des vecteurs de vitesse de crête de vague étant un vecteur de vitesse d'une crête de vague sur la surface de l'eau ;
un module de correction (16) configuré pour corriger chacun des vecteurs de vitesse de crête de vague calculé en la pluralité de positions par le module de calcul (11), sur la base d'un parmi le vecteur de vitesse de crête de vague calculé à l'intérieur d'une zone prédéterminée, dans la plage prédéterminée par le module de calcul (11) et un vecteur de vitesse de vague océanique à l'intérieur de la zone prédéterminée, dans la plage prédéterminée, le vecteur de vitesse de vague océanique étant un vecteur de vitesse d'une vague océanique ;
un module de fixation de première zone (14) configuré pour fixer une première zone dans une direction azimutale arbitraire comme zone prédéterminée ; et
un module de fixation de deuxième zone (15) configuré pour fixer une deuxième zone plus éloignée que la première zone dans une direction azimutale correspondant à celle de la première zone ;
dans lequel le module de correction (16) corrige chacun des vecteurs de vitesse de crête de vague calculés en la pluralité de positions par le module de calcul (11), en soustrayant de celui-ci le vecteur de vitesse de crête de vague calculé à l'intérieur de la zone prédéterminée, dans la plage prédéterminée par le module de calcul (11) ; et
dans lequel le module de correction (16) corrige les vecteurs de vitesse de crête de vague dans une pluralité de positions à l'intérieur de la deuxième zone en soustrayant le vecteur de vitesse de crête de vague à l'intérieur de la première zone, de chacun des vecteurs de vitesse de crête de vague de la deuxième zone.

2. Estimateur de courant de marée de surface (10) de la revendication 1, comprenant également un module de calcul de vecteur de vitesse de vague océanique, configuré pour calculer un vecteur de vitesse de vague océanique en l'une de la pluralité de positions en soustrayant un vecteur de vitesse de courant de marée en l'une position, du vecteur de vitesse de crête de vague calculé dans ladite une position par le module de calcul, le vecteur de vitesse de courant de marée étant un vecteur de vitesse d'un courant de marée,
dans lequel le module de correction (16) corrige chacun des vecteurs de vitesse de crête de vague calculés en la pluralité de positions par le module de calcul, en soustrayant de ce vecteur le vecteur de vitesse de vague océanique calculé par le module de calcul de vecteur de vitesse de vague océanique.

3. Estimateur de courant de marée de surface (10) de la revendication 1, comprenant également un module de division de zone (13) configuré pour diviser la plage prédéterminée par une plage azimutale prédéterminée, pour former une pluralité de sous-zones,
dans lequel le module de fixation de première zone (14) fixe la première zone pour chacune de la pluralité de sous-zones,
dans lequel le module de fixation de deuxième zone (15) fixe la deuxième zone pour la sous-zone pour laquelle la première zone correspondante est fixée, et
l'estimateur de courant de marée de surface (10) comprenant également un module d'intégration de zone (17) configuré pour intégrer la pluralité de sous-zones incluant la deuxième zone où la correction est réalisée par soustraction avec le vecteur de vitesse de crête de vague dans la première zone correspondante.

4. Appareil radar (1) comprenant :
une antenne (5) configurée pour transmettre et recevoir des ondes radio ;
l'estimateur de courant de marée de surface (10) de l'une quelconque des revendications 1 à 3, dans lequel le module de calcul (11) est configuré pour calculer les vecteurs de vitesse de crête de vague sur la base de signaux de réception reçus par l'antenne (5) ; et
une unité d'affichage (4a, 4b) configurée pour afficher un résultat de calcul du module de correction de l'estimateur de courant de marée de surface (10) de telle sorte qu'un utilisateur puisse confirmer.

5. Procédé d'estimation d'un courant de marée de surface, comprenant :
une étape pour calculer des vecteurs de vitesse de crête de vague en une pluralité de positions dans une plage prédéterminée d'une surface d'eau, chacun des vecteurs de vitesse de crête de vague étant un vecteur de vitesse d'une crête de vague sur la surface de l'eau ;
une étape pour corriger chacun des vecteurs de vitesse de crête de vague calculé en la pluralité de positions par le module de calcul, sur la base d'un parmi le vecteur de vitesse de crête de vague calculé à l'intérieur d'une zone prédéterminée, dans la plage prédéterminée par le module de calcul (11) et un vecteur de vitesse de vague océanique à l'intérieur de la zone prédéterminée, dans la plage prédéterminée, le vecteur de vitesse de vague océanique étant un vecteur de vitesse d'une vague océanique ;
une étape pour fixer une première zone dans une direction azimutale arbitraire comme zone prédéterminée ; et
une étape pour fixer une deuxième zone plus éloignée que la première zone dans une direction azimutale correspondant à celle de la première zone ;
dans lequel lors de l'étape de correction, chacun des vecteurs de vitesse de crête de vague calculés en la pluralité de positions est corrigé en soustrayant de celui-ci le vecteur de vitesse de crête de vague calculé à l'intérieur de la zone prédéterminée dans la plage prédéterminée ; et
dans lequel lors de l'étape de correction, les vecteurs de vitesse de crête de vague sont corrigés en une pluralité de positions à l'intérieur de la deuxième zone en soustrayant le vecteur de vitesse de crête de vague à l'intérieur de la première zone, de chacun des vecteurs de vitesse de crête de vague de la deuxième zone.

6. Programme d'estimation de courant de marée de surface qui, lorsqu'il est exécuté par un ordinateur, amène l'ordinateur à mettre en oeuvre le procédé de la revendication 5.
